# EUROPEAN PATENT APPLICATION

(11) **EP 3 926 914 A1**
(43) Date of publication of application: **22.12.2021**
(21) Application number: 20180870.6
(22) Date of filing: 18.06.2020
(51) Int. Cl.: H04L 29/06, H04W 4/02, H04W 12/00, H04W 48/04, H04L 29/08

(54) **METHOD AND SYSTEM FOR VALIDATING PHYSICAL LOCATION OF USER, USER DEVICE AND TAG**

(71) Applicant: Svep Oy, 20100 Turku (FI)
(72) Inventor: Kärkkäinen, Jani, 20100 Turku (FI); Orovuo, Pasi, 71570 Syvänniemi (FI)
(74) Representative: Aaltonen, Janne Lari Antero

(57) **Abstract**

Disclosed is a method and a system for validating a physical location of a user, a user device and a tag. The method comprises generating a code image for the tag; installing the tag comprising the generated code image at the physical location; receiving a reading of the code image of the installed tag read by the user device; determining a physical location of the user device; verifying whether the reading of the code image of the installed tag matches with the generated code image of the tag; and validating whether the physical location of the user, the user device and the installed tag are correct.

## Description

### TECHNICAL FIELD

The present disclosure relates generally to two-dimensional code images; and more specifically, to methods and systems for validating physical location of a user, a user device and a tag.

### BACKGROUND

In recent times, technology has played a vital role in rapid development across a multitude of industries either in a direct or indirect manner. Notably, the security and services industry for instance hugely benefitted from emerging technologies. Recently, code images and tags such as QR codes, bar codes, RFID tags have been employed for plurality of purposes, such as obtaining contact or financial information of a person, initiating a web application, executing a transaction and so forth. However, such code images that are presently known in the art are prone to forging, wherein the user captures a photograph of the code image and may have unauthorized access thereto.

Generally, two-dimensional code images or optical codes have been used to provide authentication or authorization. However, such two-dimensional codes or tag have proven to be easily forged. Generally, forging a tag is done by copying the tag or by taking an image or a screenshot of said tag and printing it out or by reading the tag from the screen. By doing this, the tag can be represented in any other location, losing its uniqueness or bond to a location. For example, forging of said code images is done by taking a picture of a workplace time-and-task-tracking tag and printing a copy of said code image at a remote location. Consequently, the personnel could potentially use the copied or replicated tag to produce a result like the actual tag present at the original location.

Conventional solutions to overcome said problems associated with code images are based on proprietary mechanical, electrical or electromechanical devices such as, but not limited to, RFID or NFC-readers, magnetic stripe reader, numeric keyboards and the like. However, such technologies require the user to carry one or more additional physical devices or objects such as RFID/NFC key fobs, access cards, mechanical keys and the like. Furthermore, aforementioned electrical and mechanical devices require an external power supply, network access or both to communicate with a backend system to provide the required functionality. Also, existing solutions, such as the key fobs and magnetic stripe cards are still susceptible to forgery and theft even in secure environments. Moreover, such solutions tend to be expensive in implementation due to requirement of manual labour upon installation and due to the limited versatility of said devices i.e. said dedicated devices that are manufactured specifically for these purposes render their production more expensive. Lastly, such systems require frequent maintenance and replacement making it even more impractical.

Therefore, in light of the foregoing discussion, there exists a need to overcome the aforementioned drawbacks associated with methods of ensuring location-specific use of tags.

### SUMMARY

The present disclosure seeks to provide a method for validating a physical location of a user, a user device and a tag. The present disclosure also seeks to provide a system for validating a physical location of a user, a user device and a tag. The present disclosure seeks to provide a solution to the existing problem of forging and unauthorised use of code images. An aim of the present disclosure is to provide a solution that overcomes at least partially the problems encountered in prior art, and provides a reliable and secure implementation of a code images that are specific to defined physical locations.

In one aspect, an embodiment of the present disclosure provides a method for validating a physical location of a user, a user device and a tag, the method comprising
- generating a code image for the tag;
- installing the tag comprising the generated code image at the physical location;
- receiving a reading of the code image of the installed tag read by the user device;
- determining a physical location of the user device;
- verifying whether the reading of the code image of the installed tag matches with the generated code image of the tag; and
- validating whether the physical location of the user, the user device and the installed tag are correct.

In another aspect, an embodiment of the present disclosure provides a system for validating a physical location of a user, a user device and a tag, the system comprising
- a server arrangement communicably coupled with the user device configured to read a code image of the tag, wherein the server arrangement is configured to
   - generate the code image data for the tag,
   - receive a reading of the code image data of an installed tag read by the user device,
   - determine a physical location of the user device,
   - verify whether the reading of the code image data of the tag matches with the generated code image data,
   - validate whether the physical location of the user, the user device and the tag are correct; and
- the tag, installed at the physical location, comprising the generated code image.

The system and method as described herein the present disclosure, ensure that the tag, comprising the code image therein, is specific to the physical location defined. As the code image can only be validated at the physical location, the tag cannot be forged. Moreover, the user employs the user device to read the code image in tag proximate to the physical location, and the validation of the code image data indicates that the tag, the user device and the user are in the correct physical location.

The additional advantage of the embodiments of the present disclosure is that transferring the text string between the server arrangement and the tag and generating the code image in the electronic device saves transfer capacity, buffer memory and energy thus making the data communication more efficient.

Embodiments of the present disclosure substantially eliminate or at least partially address the aforementioned problems in the prior art, and enable validation of code images at predefined physical locations, thereby eliminating the problem of forging and unauthorised use of code images.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1: is an illustration of steps of a method for validating a physical location of a user, a user device and a tag in accordance with an embodiment of the present disclosure;
- FIGs. 2, 3A, 3B, 4A and 4B: are schematic illustrations of a system for validation of a user, a user device and a tag, in accordance with various embodiment of the present disclosure;
- FIG. 5 and 6: are flow diagrams illustrating implementation of code image in a dynamic manner, in accordance with an embodiment of the present disclosure; and
- FIG. 7: is a schematic illustration of a block diagram illustrating implementation of a triple authentication system.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a method for validating a physical location of a user, a user device and a tag, the method comprising
- generating a code image data for the tag;
- installing the tag comprising the generated code image at the physical location;
- receiving a reading of the code image data of the installed tag read by the user device;
- determining a physical location of the user device;
- verifying whether the reading of the code image data of the installed tag matches with the generated code image data of the tag; and
- validating whether the physical location of the user, the user device and the installed tag are correct.

In another aspect, an embodiment of the present disclosure provides a system for validating a physical location of a user, a user device and a tag, the system comprising
- a server arrangement communicably coupled with the user device configured to read a code image of the tag, wherein the server arrangement is configured to
   - generate the code image data for the tag,
   - receive a reading of the code image data of an installed tag read by the user device,
   - determine a physical location of the user device,
   - verify whether the reading of the code image data of the tag matches with the generated code image data,
   - validate whether the physical location of the user, the user device and the tag are correct; and
- the tag, installed at the physical location, comprising the generated code image.

The method and system for validating the physical location of the user, the user device and the tag, as described herein the present disclosure ensure that tag, comprising the code image therein, is specific to the physical location defined therefore. Beneficially, restricting the use of the tag to a given physical location prevents malicious and unauthorised use thereof. Furthermore, the code image cannot be forged. It will be appreciated that restricting the use of the tag to a specific physical location increases the versatility of the code images. Specifically, as described in the present disclosure, the code images can be used for purposes that were previously reserved for proprietary electrical, mechanical or electromechanical devices such as unlocking doors of the buildings or cars, recording attendance, data storage and so forth. Beneficially, the present disclosure significantly eliminates the need for physical devices such as RFID/NFC key fobs, access cards, mechanical keys.

The present disclosure relates to a method and system for validating a physical location of a user, a user device and a tag. Pursuant to embodiments of the present disclosure, the method and system provided herein validate that the user, the user device and the tag are in a common physical location. Herein, the term *"physical location"* refers to a geographical location that identifies an area of defined radius. Specifically, the physical location of user, user device and the tag are validated when they are collectively present in such an area of defined radius defined by the physical location. In particular, the physical location may be a city, village, corridor, building, room, section of a room and so forth. It will be appreciated that the term *"physical location"* does not intend to limit the scope of the term to a geographical location defined by coordinates representing latitude, longitude and elevation. In an example, the physical location of an object may be identified based on external surroundings or the environment or in relation to other nearby objects. Various scopes of the term, and methods of defining and identifying the physical location are discussed herein later in the disclosure.

Throughout the present disclosure, the term *"user device"* refers to device associated with (or used by) a user, that is capable of enabling the user to perform specific tasks associated with the aforementioned method and system. Furthermore, the user device is intended to be broadly interpreted to include any device that may be used for data communication over a communication network. Examples of user device include, but are not limited to, cellular phones, personal digital assistants (PDAs), handheld devices, wireless modems, laptop computers, personal computers, etc. Additionally, the user device may include a display, a camera, a memory, a processor, a communication interface. Moreover, the user device is configured to host one or more applications thereon to support and enable the operation of the system. Herein, the term *"user"* refers to a person (i.e. a human being) and can be e.g. a cleaner, a security person, etc. in a company that is associated with or operates the user device. Alternatively, the user may be a non-human being for example a robot or an autonomous vehicle in a factory, comprising functionalities from the user device functionalities above.

The system for validating the physical location of the user, the user device and the tag comprises a server arrangement. Herein, the term *"server arrangement"* refers to a structure or a module that includes programmable or non-programmable components or both configured to store, process and share information. Specifically, the server arrangement includes any arrangement of physical or virtual computational entities capable of enhancing information to perform various computational tasks. Furthermore, it should be appreciated that the server arrangement may be a single hardware server or plurality of hardware servers operating in a parallel or distributed architecture. In an example, the server arrangement may include components such as memory, a processor, a network adapter and the like, to store, process and share information with other computing components, such as user device. Furthermore, the server arrangement is communicably coupled with the user device. Specifically, the server arrangement may be communicably coupled with the user device using a wireless data communication network.

The server arrangement may be communicably coupled with the tag via a wired or a wireless communication network. Throughout the present disclosure, the term *"communication network"* refers to any wired or wireless connection, including but not limited to, the Internet, Local Area Networks (LANs), Wireless Local Area Networks (WLANs), Metropolitan Area Networks (MANs), Wireless Metropolitan Area Networks (WMANs), second generation (2G) telecommunication networks, third generation (3G) telecommunication networks, fourth generation (4G) telecommunication networks, fifth generation (5G) telecommunication networks, sixth generation (6G) telecommunication networks, Worldwide Interoperability for Microwave Access (WiMAX) networks and suchlike.

The method comprises generating a code image for the tag. The server arrangement is configured to generate the code image data for the tag. Herein, the term *"code image"* refers to an image containing machine-readable optical label that when decoded provides information or an action or a combination thereof that is associated therewith. The code image can be visualised on a tag in a static tag, in a dynamic-online tag or in a dynamic-offline tag manner. The static tag can be created in the server arrangement including its data elements, a tenant, a domain, a path and a token. The dynamic-online and dynamic-offline tags are implemented with a display associated with the electronic device wherein the electronic device creates dynamic-online and dynamic-offline tags visualised on the display. This reduces significantly the amount of data transferred between the server arrangement and the electronic device.

In an embodiment of a static tag, the code image is visualised on the tag in a static manner, wherein the code image data is generated by a server arrangement and visualised and printed or stored or displayed as a static image on the tag comprising an URL. When a user device reads the code image and obtains the URL, the user device makes a simple request to the URL for more information. In the static tag the code image data comprises a tenant, a domain, a path and a token. The "tenant" is an instance of the platform, which has its own unique set of users, tags, actions, settings, etc. A tenant can be used by a company, a community, an association or something similar. Each user organization of the platform has their own tenant to differentiate them from other platform users. The format of the tenant can be for example acme. Additionally, each of the tags has a randomly generated unique identifier, a "token", associated therewith. The token is unique in a scope of the tenant and its format can be for example 0d9df8g. The static tag format for the generated URL comprising the tenant (acme), the domain (name.io), the path (t) and the token (0d9df8g) can be for example https://acme.name.io/t/0d9df8g.

The code image can be visualised on a display that is connected to an electronic device in a dynamic manner in two modes: a dynamic-online mode or a dynamic-offline mode. In the dynamic-online mode the electronic device periodically requests new tokens from the server arrangement wherein the code image is generated in the electronic device and visualised on a display. In the dynamic-offline mode the electronic device has a shared secret that is being used to seed a Time-based One-Time Password algorithm (TOTP) generator, and TOTP tokens are created independently of the server. Whenever the server receives a request from the electronic device the server arrangement calculates the current TOTP token based on the known shared secret of the electronic device and current time.

In an embodiment, wherein a code image is visualised on a tag in a *"dynamic-online"* mode, the server arrangement is communicably coupled all the time to the tag using a communication network. Herein the tag comprises a display, wherein the display is implemented using an electronic device. At the initial setup the server arrangement generates the "code image data" comprising a tenant and an API key and communicates them together with a "get url" command to the electronic device via the communication network. The electronic device sends a request to the server arrangement to get a token and a validity time of the token. The electronic device creates a URL and visualises it on the display for the set validity time. When the validity time is drawing near its expiration the electronic device sends a new request to the server arrangement to get a new token and a new validity time and visualises it on the display for the set new validity time. The format of the created URL visualised on the dynamic online tag can be for example https://acme.name.io/t/d8cba3 wherein the token is described as d8cba3, path as t, domain as name.io and tenant as acme. The user is authenticated and access is provided to the user device. Subsequently, the user device is authenticated by the server arrangement. The user points the user device towards the tag. The camera in the user device reads the code image of the tag and the user device communicates the reading of the code image to the server arrangement using the read URL in the code image. The server arrangement may request additional information from the tag via the data communication network. The additional information may be for example, location of the tag as detected by the electronic device, or an image captured using the front camera of the electronic device. The requested additional information is sent from the tag to the server arrangement. The physical location of the user, the user device, and the tag are further validated based on the additional information. The server arrangement sends the first or the second function to the user device depending on whether the physical location of the user, the user device and the tag are correct or incorrect. Optionally the user device may show a message to the user to request for example a confirmation of acceptable validation wherein the user device sends the information to the server arrangement that returns an acknowledgement to the user device that shows it to the user.

In an embodiment, wherein the code image is visualised on a tag in a "dynamic-online" mode, the server arrangement may request the user device to provide a first additional verification data, wherein providing the first additional verification data to the server arrangement requires the user to perform an action. Meanwhile, the server arrangement may request a second additional verification data from the tag. Subsequently, the tag broadcasts a signal, such as an audio signal, a visual signal or an audio-visual signal, that is detected by the user device. The user device communicates information related to the detected signal to the server arrangement, wherein upon receiving such information, the server arrangement communicates to the user device a confirmation thereof. Consequently, the user device further communicates the information related to the detected signal to the server arrangement. The server arrangement then compares the information received directly from the user device to validate the physical location of the user device and the tag. Upon validation of the physical location of the user device, the user performs the action, such as capturing a picture of the tag to provide the first additional verification data to the server arrangement. The server arrangement analyses the first additional verification data to validate the physical location of the user. The server arrangement sends the first or the second function to the user device depending on whether the physical location of the user, the user device and the tag is correct or incorrect. Optionally the user device may show a message to the user to request for example a confirmation of acceptable validation wherein the user device sends the information to the server arrangement that returns an acknowledgement to the user device and it shows it to the user.

In an embodiment, wherein the code image is visualised on a tag in a "dynamic-offline" mode, the server arrangement is communicably coupled to the tag using a communication network only on request. Herein the tag comprises a display, wherein the display is implemented using an electronic device. At the initial setup the server arrangement generates a tenant and an API key and communicates them to the electronic device via any communication network. Alternatively the tenant and the API key can be transferred to the tag using an out-of-band type of delivery mechanism, including but not limited to, a replaceable memory card, Secure Digital Card (SD), Compact Flash, USB memory stick, Multimedia Card (MMC), Hard Drive Disk (HDD), Solid-State Drive (SSD) and suchlike, or via manual input via a user interface such as a keyboard or a touch screen, or by using a camera on the electronic device. Additionally, the electronic device may receive a shared secret and a time interval via a similar out-of-band delivery mechanism or manual input via a user interface. After the initial setup the data communication network, if one has been utilized, can be disconnected to save network capacity, cache memory and power enabling full offline use. It is appreciated that in an embodiment the setup process can be completed even on a device that has no network connection whatsoever. The electronic device generates a token based on the shared secret and the current time, creates an URL for example https://acme.name.io/t/e2145c, visualises it as a code image on the display for the set validity time. After the validity time is exceeded the electronic device generates a new token based on the shared secret and the current time, creates a new URL, visualises it as a code image on the display for set validity time.

Optionally, upon reading and validation of the code image data, a combination of digits that unlocks a door is provided to the user device. In another example, upon reading and validation of the code image data, the server arrangement enables steps to record entrance of the user operating the user device to read the code image. Examples of the code image include, but are not limited to, a barcode, a Quick Response (QR) code, a 4-state code, an RFID tag. The server arrangement is configured to obtain the information that is to be encoded in the code image and to generate a code image data representing such information. Furthermore, the code image as described in the present disclosure is validated when the code image is read at a given physical location. Such physical location is associated with the code image by the server arrangement when generating the code image data.

Optionally, the server arrangement is configured to enable a web-based management platform on a computing device. In particular, such computing devices are associated with an administrator entity that provides instructions to the server arrangement, relating to generation and programming of the code image. Specifically, the administrator entity refers to an entity such as a person, an organisation, a community, a company or a virtual program (such as, an autonomous program or a bot) that manages operation including generation, programming, and functioning of the code images. More specifically, the administrator entity employs the web-based management platform to provide information relating to the physical location of the code image to the server arrangement. Furthermore, the administrator entity defines the information or action that the code image represents. In particular, the administrator entity, by way of the web-based management platform provides instructions to the server arrangement relating to the actions that are to be taken upon validation of the code image.

More optionally, the server arrangement is configured to provide a customised web-based management platform based on an administrator entity. In particular, the web-based management platform is customisable in operation thereof with respect to the operational administrator entities, code images generated, information or actions that are to be programmed, settings and so forth. It will be appreciated that the web-based management platform may be customised to fit requirements of a person, an organisation or a community. Furthermore, the web-based management platform is associated with a plurality of administrator entities, wherein each of the administrator entities may have a customised variation of the web-based management platform therefore.

The method comprises installing the tag comprising the generated code image to the physical location. The system comprises the tag installed at the physical location. Specifically, the tag comprises the generated code image. Herein, the term *"tag"* refers to a visual representation of the code image, wherein the tag is installed at the physical location that is associated with the generated code image. Specifically, the code image is visually represented using the tag, wherein the representation is in a printed or a digital format. More specifically, the tag may be printed on a paper, cloth, plastic, metal and the like, and such printed tag is displayed at the physical location. Alternatively, the tag is stored digitally as a digital media displayable on a visual display such as a computer display or mobile phone screen, and such visual display is installed at the physical location associated with the code image displayed in the tag. It will be appreciated that the tag is installed in such a manner that it is visible to the user and readable by the user device. In an example, the tag may be in the form of a code image printed on a paper and such tag may be attached to a wall in the physical location. In another example, the tag may be in the form of a code image displayed on a visual display mounted on a wall, a floor, a ceiling, a table, on a tripod or on some other surface or object, and such tag may be placed at the physical location. It will be appreciated that the physical location at which the tag is to be installed is defined during the generation of the code image in the tag and stored in the server arrangement. Therefore, the physical location at which the tag is to be installed is predefined prior to installation of the tag.

Optionally, the tag comprises a display for displaying the code image, wherein the displayed code image is a first code image during a first period of time and a second code image during a second period of time. Herein, the tag installed at the physical location is implemented using a display, wherein the code image is provided to the display in a digital format. The display is implemented using an electronic device such as a mobile phone, a tablet, a computer, a smart television or any device comprising a display. Hereinafter, the term "electronic device" refers to the electronic device associated with the display of the tag. More optionally the electronic device may host a second application thereon to present the code image. Furthermore, the code image may be stored on the electronic device. Alternatively, the code image is communicated to the display using a data communication network. Moreover, the code image may vary in different intervals of time. For example, the code image display may be the first code image during a certain interval of time in a day and may be the second code image during another interval of time in the day. It will be appreciated that such information relating to varying code images is provided using the server arrangement through the second application on the electronic device comprising the display.

Optionally, the system may comprise a triple authentication, wherein an electronic device may comprise a camera configured to take a picture of a user to identify the user. A user device is configured to authenticate the user by using a first camera of the user device and a face recognition means, wherein the face recognition data is sent over a data communication network to the server arrangement and it is stored as a first photo in a server arrangement. The user points a second camera of the user device towards the electronics device that visualises a code image as a tag on the display of the electronics device while the second camera in the user device reads the code image of the tag and the user device communicates the reading of the code image to the server arrangement using the read URL-address in the code image. The data in the code image may comprise one or more instructions for the user device or for one or more applications stored in the user device. The server arrangement instructs a first application in the user device to take a second photo of the user and send the second photo to the server arrangement. The electronic device is configured to take a third photo of the user, identify the user device and send the third photo to the server arrangement. The physical location of the user, the user device and the tag visualised on the display are validated by the system based on the stored first photo, the second photo, the third photo in the server arrangement, and the identified user device. The server arrangement is configured to send the first or the second function to the user device depending on whether the physical location of the user, the user device and the tag are correct or incorrect.

The user device is configured to read the code image of the tag. As aforementioned, the user device comprises a camera therein. The user associated with the user device points the camera of the user device towards the tag. Subsequently, the user device scans the code image in the tag using the camera. Additionally, the user device may capture a picture of the tag to read the code image therein. As mentioned previously, the tag is installed at the physical location in a manner that the user device is able to read it. Furthermore, the user device communicates the reading of the code image in the installed tag to the server arrangement.

Optionally, the user device is configured to host a first application to enable reading of the code image in the tag and communicating the reading to the server arrangement using the data communication network. Specifically, the first application manages connection of the user device with the server arrangement. Furthermore, the first application ensures an accurate reading of the code image in the tag by providing scanning instructions to the user. In particular, such scanning instructions may assist the user in aligning, focusing and orienting the code image accurately using the camera of the user device. In an instance, the first application may not read the code image until the code tag is accurately aligned and is in focus.

Optionally, the user device requires a preliminary authorisation to verify an identity of the user. In particular, the preliminary authorisation may require the user to enter a security verification code, or to provide a fingerprint for biometric verification or a verification using facial recognition of the user. Notably, the user provides authenticating information to gain access to the user device or to the first application to scan the code image in the tag.

The method comprises receiving a reading of the code image of the installed tag read by the user device. The server arrangement is configured to receive the reading of the code image of the installed tag read from the user device. As mentioned previously, the user device is communicably coupled to the server arrangement. Therefore, the user device reads the code image in the tag, and communicates such reading to the server arrangement. In an example, the user device captures a picture of the code image in the tag, using the camera of the user device and communicates said picture to the server arrangement.

The method comprises determining a physical location of the user device. The server arrangement is configured to determine the physical location of the user device. Notably, the physical location of the user device is determined to match with the physical location where the tag is installed. As mentioned previously, the code image is validated when the user device reading the code image is at the physical location associated with the code image. Therefore, the physical location of the user device is determined to validate whether the user device is at the same physical location as the tag. In an example, the server arrangement may send a request to the user device to provide location thereof. Consequently, the user device may employ positioning systems, for example but not limited to the global positioning system (GPS), GLONASS, Galileo, etc. to determine the physical location thereof and communicate said determined physical location to server arrangement. Optionally, the first application on the user device used to read the code image may be employed to receive the request for physical location and communicate the determined physical location to the server arrangement. In another example, the server arrangement employs additional components to determine the physical location of the user device as discussed in detail herein below.

Optionally, the physical location of the user device is determined using sensors on the user device. Herein, the physical location refers to geographical coordinates representing latitude, longitude and elevation. In an instance, the physical location of the tag is predefined during generation of the code image. Alternatively, in an instance when the tag comprises a display implemented using the electronic device, sensors on the said electronic device are used to determine the physical location at which the tag is installed. It will be appreciated that the sensors of the user device, and optionally, the electronic device associated with the tag, are used to locate latitude, longitude and elevation to determine a significantly accurate physical location of the user device and optionally, the tag. In an implementation, a geofence may be defined around the tag installed at the physical location and the physical location of the user device may be determined as identical to the tag, when the user device is present in the predefined geofence.

Optionally, the server arrangement employs one or more external Bluetooth beacons to determine the physical location of the user device. Notably, external Bluetooth beacons are hardware transmitters that transmit a unique identifier at predefined periodic intervals in a short radius. Such one or more external Bluetooth beacons are installed proximate to the tag in the physical location, wherein the one or more external Bluetooth beacons transmit a unique identifier linked to the code image. Therefore, upon reading the code image of the tag at the physical location and receiving the identifier from the one or more Bluetooth beacons, the first application on the user device sends a confirmation to the server arrangement that the user device is within a range of the one or more Bluetooth beacons, thereby determining and validating the physical location of the user device. In an implementation, the one or more external Bluetooth beacons may be Bluetooth low energy beacons.

Optionally, the physical location of the user device is determined using one or more Wi-Fi access points proximate to the physical location of the tag. In particular, information relating to Wi-Fi access points proximate to the tag may be stored in the server arrangement. Such information relating to the Wi-Fi access points includes, but is not limited to, SSID, MAC-address, external IP-address of the access point. Additionally, or alternatively, optionally, the administrator entity may provide the server arrangement with a list of verified (namely, whitelisted) Wi-Fi access points proximate to the tag. In a first instance, the server arrangement may require the user device to be connected to one of the verified Wi-Fi access points proximate to the tag to determine the physical location of the user device. Optionally, when the tag comprises a display associated with the electronic device, the server arrangement may require that the electronic device may also be connected to the same verified Wi-Fi access point that the user device is connected with. In a second instance, the server arrangement may require that the user device is in a range of one or more verified Wi-Fi access points proximate to the tag, wherein connectivity of the user device to the verified Wi-Fi access points may not be mandatory. Optionally, when the tag comprises a display associated with the electronic device, the server arrangement may require that the electronic device may also be in a range of one or more verified Wi-Fi access points. In a third instance, the server arrangement may require that the user device is only in the range of the verified Wi-Fi access points, wherein any Wi-Fi access point not in the list of verified Wi-Fi access points may be intended as malicious and if the user device is in a range of any non-verified Wi-Fi access point, the validation of the physical location of the user device is unsuccessful. In the instances discussed herein above, the server arrangement provides instructions to the user device and receives information therefrom using the first application hosted by the user device. Optionally, the server arrangement provides instructions to the electronic device associated with the display of the tag and receives information therefrom using the second application hosted by the electronic device.

Optionally, the physical location is determined based on a carrier network associated with the user device. Herein, the physical location of the user device may be validated when the user device operates on a given carrier network. Notably, information relating to such given carrier network may be provided to the server arrangement and stored therein. The first application on the user device may provide information relating to the carrier network of the user device to the server arrangement. Optionally, in an instance when the tag comprises a display associated with the electronic device; the server arrangement may require that the electronic device may also be connected to the same carrier network that the user device is connected with.

Optionally, the physical location of the user device is validated based on the network of the user device. Specifically, the physical location is validated based on the IP address of the network of the user device. Notably, the server arrangement may have a list of whitelisted IP addresses and may require the user device to operate on one of the IP addresses in the list. Alternatively, the server arrangement may have a list of blacklisted IP addresses and may require that the user device does not operate on one of the IP addresses in the list. Optionally, in an instance when the tag comprises a display associated with the electronic device; the server arrangement may require that the electronic device may also operate on the same IP address that the user device is operational on. Alternatively, optionally, the server arrangement may specify the IP addresses for the tag and the user device that they have to operate on, to ensure validation of the physical location.

The method further comprises verifying whether the reading of the code image of the tag matches with the generated code image data. The server arrangement is configured to verify whether the reading of the code image of the tag matches with the generated code image data. Herein, the reading of the code image is received by the server arrangement from the user device. Also, the server arrangement has the generated code image data stored thereon. Therefore, the server arrangement compares the generated code image data and the reading of the code image received from the user device to determine whether they match. In an example, the code image may comprise a finder pattern therein for alignment and positioning of the code image, such as in a QR code. In instance, the reading of the code image may be a picture of the code image in the tag received from the user device, wherein the user device may process the picture to obtain a usable image of the code image to be able to read the code image data that can be used for comparison with the generated code image data.

Optionally, the method further comprises generating the code image in a dynamic manner. Optionally, the server arrangement is further configured to generate the code image in a dynamic manner. Herein, the server arrangement generates a new code image data, a token for a new code image at regular intervals of time either in a dynamic-online or in a dynamic-offline mode. It will be appreciated that the code image is generated in a dynamic manner in an instance when the tag comprises the display associated with the electronic device. In case of a dynamic-online code image, an electronic device is connected via the communication network to the server arrangement and it periodically makes an HTTPS request to the server arrangement, which generates a random token, e.g. 5FF2aae4, for the code image and returns it to the electronic device. The random token is converted to a tenant URL, e.g. https://tenant.domain.io/t/5FF2aae4, visualised in a code image and displayed on the electronic device display. Tokens are created only if the electronic device requests one to be created. On creation the server arrangement defines the validity of the token which the electronic device then uses to refresh it. In case of dynamic-offline mode the electronic device is not all the time or is not connected at all to the server arrangement. Instead the electronic device has a shared secret and the tenant information that is transferred from the server arrangement to the electronic device in an out-of-band manner, for example using, but not limited to, a wired or wireless network or a replaceable memory or a USB-stick, and it is being used to seed the TOTP generator, and TOTP tokens are created independently of the server arrangement. Whenever the server arrangement receives a request for such a token URL, e.g. https://tenant.domain.io/token, the server arrangement calculates the current TOTP token based on the known shared secret of the electronic device and a current time. If it matches the tag is read at a correct point of time. The display associated with the electronic device displays the new code images at the regular intervals of time. The interval of time may be 1 millisecond (ms), 1 second, 30 seconds, 1 minute, 5 minutes, 1 hour, 1 day, 1 week, 1 month, 1 year, 10 years and so forth. More optionally, the interval of time may be for example, from 1 ms, 2 ms, 3 ms, 4 ms, 5 ms, 10 ms, 50 ms, 100 ms, 1 second, 2 seconds, 3 seconds, 4 seconds, 5 seconds, 10 seconds, 20 seconds, 30 seconds, 40 seconds, 50 seconds, 1 minute, 2 minutes, 3 minutes, 4 minutes, 5 minutes, 10 minutes, 20 minutes, 30 minutes, 1 hour, 2 hours, 3 hours, 5 hours, 10 hours, 20 hours, 1 day, 2 days, 3 days, 4 days, 5 days, 6 days, 1 week, 2 weeks, 3 weeks, 4 weeks, 5 weeks, 10 weeks, 20 weeks, 30 weeks, 40 weeks, 50 weeks, 1 year, 2 years, 3 years, 4 years, 5 years, 6 years, 7 years, 8 years, 9 years, 10 years. In an exemplary implementation of the present disclosure, the server arrangement may require the user device to register three consecutive successful reads of the three different code images within three seconds. Therefore, in such implementation, a new code image is to be displayed at the display of the tag every second or more frequently for the user device (and, the user) to be validated.

Optionally, the server arrangement assigns in a dynamic-offline mode a unique identifier (hereinafter, referred as "shared secret") to each of the electronic devices associated with the tag. Such shared secret may be communicated to the electronic device using out-of-band transfer method, for example a replaceable memory card or similar. The tag, associated with the electronic device, generates a code image using the shared secret and the current time. Such code image may only be known from the tag. It will be appreciated that since the code image is generated using the current time, the code image varies as time changes. Therefore, at a particular instance, the user device reads the code image and transmits the reading to the server arrangement. The server arrangement evaluates the token received from the user device in textual format using the shared secret stored therewith and the current time at that particular instance, and then matches the generated code image data with the received reading of the code image to determine whether the code images data match. Notably, a Time-based One-Time Password algorithm (TOTP) may be employed to generate the shared secret and corresponding generated code image data. The TOTP is an extension of the HMAC-based One-time Password algorithm (HOTP) that generates a one-time password using the current time.

In an embodiment, the method further comprises communicating a generated tenant and an *"API key"* to the tag over a communication network. Such API key is a unique string having at least 512 bits of length. The API key is used to authorise communication between the tag and the server arrangement. Notably, the server arrangement is configured to communicate a generated tenant and the API key to the tag over the communication network wherein the tag generates itself a dynamic code image comprising the tenant and the token. It may be understood that in such embodiment, the tag is implemented as the display associated with the electronic device. Herein, the communication network may be a wired or wireless communication network. Herein the code images are generated in a dynamic manner, at regular intervals of time containing an URL addressing the server arrangement. Furthermore, the tag may communicate physical location (namely, latitude, longitude and elevation) thereof using the communication network.

The method comprises validating whether the physical location of the user, the user device and the installed tag are correct. The server arrangement is configured to validate whether the physical location of the user, the user device and the tag are correct. Herein, the server arrangement compares the physical location of the user device with the physical location of the tag. In an embodiment, the physical location of the tag is the physical location predefined during generation of the code image. In another embodiment, the physical location of the tag is communicated by the tag. Therefore, such physical location of the tag is compared with the physical location determined for the user device to validate whether the user device and the installed tag are in the correct physical location. It will be appreciated that the physical location predefined during the generation of the code may also be compared with the physical location received from the tag, to determine whether the physical location of the tag is correct or incorrect. Thereafter, the physical location of the user device is validated.

Optionally, validating whether the physical location of the user, the user device and the tag are correct comprises
- calculating a distance between the physical location of the user device and the physical location of the tag; and
- providing a first function to the user device if the calculated distance is less than or equal to a predetermined distance or a second function to the user device if the calculated distance is greater than the predetermined distance.

Optionally, in this regard, the server arrangement is configured to calculate the distance between the physical location of the user device and the physical location of the tag. Herein, the distance is calculated to estimate the proximity of the user device with respect to the tag. Furthermore, the first function is provided in an instance when the calculated distance is less than or equal to the predetermined distance and therefore, the user device is determined to be proximate to the tag. In particular, the first function refers to the information or an action that is associated with the code image, as mentioned previously. Specifically, the server arrangement may enable one or more actions upon validation of the physical location of the user, the user device and the tag. In an example, the action may be providing information comprising text, numerals or a combination thereof on the user device. In another example, the action may relate to data storage, such as providing on the user device a multiple-choice list, wherein the user is requested to select one or more options from the list. In yet another example, the first function may comprise sending an information or a command to a control server, as described herein later, such as sending a request to mark attendance of the user, and thereafter, providing the confirmation message on the user device. Furthermore, the second function is provided in an instance when the calculated distance is more than the predetermined distance and therefore, the user device is determined to be far from the tag. The second function may merely comprise providing a message on the user device stating that the validation was unsuccessful. Alternatively, the second function may comprise enabling steps to block user access to a restricted area or blacklisting the user. It will be appreciated that when the server arrangement employs methods of determining the physical location of the user device that do not provide precise geographical coordinates of the user device, the calculated distance is assumed to be less than or equal to the predetermined distance if such method validates that the user device is proximate to the tag.

Optionally, the server arrangement is communicably coupled to a control server for providing the first function or the second function to the user device. Herein, the term *"control server"* refers to an external server comprising control elements that enable one or more commands or actions based on the instructions received thereto. In an example, the control server may comprise control elements associated with an electric locking means associated with entrance of a building. In such example, the first function may be providing entrance access to the user. Therefore, the server arrangement may transmit instructions for unlocking to the control server and consequently, the control server may unlock the entrance. Similarly, in such example, the second function may be refuting access to the building. Therefore, in such example, the server arrangement may transmit instructions to the control server for keeping the entrance locked. In another example, the control server may comprise control elements associated with lighting of a room, wherein the first function may be turning the lights to an '*ON'* state and the second function may be turning the lights to an *'OFF*' state. In yet another example, the control server may be associated with the management system of a security organisation, wherein upon inspection of a room, a security personnel may read the code image provided in the room. In such example, upon reading the code image, the server arrangement may provide the first function as marking the room as '*Inspected*' and may provide instructions to the control server to perform such action. In yet another example, the control server may be associated with a social media network or a messaging platform or scheduling event, wherein providing the first function may comprise posting on the social media network, or sending a message, or scheduling a meeting respectively. Optionally, the method comprises employing a control server for providing the first function or the second function to the user device.

Optionally, the method further comprises detecting an instant of time of reading of the code image and providing a fourth function to the user device if the instant of time is within the first period of time and a fifth function to the user device if the instant of time is within the second period of time. Optionally, the server arrangement is further configured to detect an instant of time of reading of the code image and provide a fourth function to the user device if the instant of time is within the first period of time and a fifth function to the user device if the instant of time is within the second period of time. Herein, the function provided to the user device is based on the instant of time of reading of the code image. In an example, the fourth function may be signing the user into a network, if the instant of time of reading of the code image is between 6:00 AM and 1:00 PM. In such example, the fifth function may be signing the user out of the network, if the instant of time of reading of the code image is between 2:00 AM and 9:00 PM. More optionally, the code images displayed in different instants of time on the tag may be different. Specifically, a first code image may be displayed in the first period of time to provide the fourth function upon reading of the first code image, and a second code image may be displayed in the second period of time to provide the fifth function upon reading of the second code image. It will be appreciated that such instructions may be provided to the server arrangement by the administrator entity using the web-based management platform.

Optionally, the method further comprises
- associating the tag further with a first orientation information of the tag;
- receiving an orientation of the user device detected during the reading of the code image;
- comparing the first orientation information with the received orientation of the user device; and
- providing a third function to the user device based on the orientation comparison.

Optionally, in this regard, the server arrangement is operable to associated the tag with a first orientation information of the tag. In one embodiment, the first orientation information is determined using the reading of the code image received from the user device. In another embodiment, when tag is implemented using the electronic device comprising the display, the first orientation information is communicated by the electronic device to the server arrangement. Furthermore, while reading the code image in the tag, different sensor values such as orientation, altitude and the like may also be recorded and communicated to the server arrangement. Optionally, the first application on the user device may record values of such parameters using sensors on the user device and communicate such values to the server arrangement. Therefore, such orientation information of the user device is compared with the first orientation information of the tag to validate whether the reading of the code image provided by the user device is captured from the tag installed at the physical location. In an example, if the tag is installed in a manner that the tag faces the south direction, the tag can only be read when the user and the user device face in the north direction. Therefore, if the reading of the code image is captured while facing a direction other than the north direction, the server arrangement may not detect it as a successful reading of the code image. In another example, the tag is augmented with orientation information, wherein the tag is located on a specific area of the room such as the wall, table, floor, ceiling and the like. Therefore, the user device must be in a certain orientation to read the code image in the tag. Such orientation may be estimated using the gyroscope and the accelerometer in the user device. Notably, the third function provided to the user device is based on the orientation comparison, specifically, based on validation of whether the reading of the code image provided by the user device is captured from the tag installed at the physical location. In an instance, when the server arrangement validates the reading provided by the user device, providing the third function may comprise enabling steps to provide the information or to perform the action associated with the code image, optionally such as providing the first function as described previously. In an instance, when the server arrangement invalidates the reading provided by the user device, providing the third function comprises displaying an error message on the user device as an indication of failure of validation.

Optionally, the server arrangement is configured to send a request for supplementary information to the user device, wherein the physical location of the user, the user device and the tag is validated further based on the supplementary information. Optionally, the method comprises sending a request for supplementary information to the user device, wherein the physical location of the user, the user device and the tag is validated further based on the supplementary information. Herein, the supplementary information refers to additional information that may be requested from the user that increases security of the system and implements a two-step or a three-step verification process. It will be appreciated that the request for supplementary information may comprise requesting the user for one or more types of information using the user device, wherein the physical location of the user and the user device may only be validated upon verification of such supplementary information. Furthermore, the server arrangement may require the user device to successfully verify one or more or all kinds of information requested therefrom to validate the physical location of the user and the user device. Moreover, such request may be provided on the user device using the first application.

In an embodiment, the tag comprises the display associated with the electronic device, wherein the electronic device broadcasts an encrypted, unique time-based one-time password at periodic intervals of time. The server arrangement provides the electronic device instructions relating to the broadcast of the encrypted time-based one-time password. Herein, providing the supplementary information may comprise recording the broadcasted time-based one-time password upon reading the code image and providing such recorded time-based one-time password to the server arrangement. Subsequently, the server arrangement may compare the received recorded time-based one-time password with the generated and encrypted time-based one-time password that was provided to electronic device for broadcasting. The physical location of the user device is validated if the received time-based one-time password matches with the generated time-based one-time password. Optionally, the encrypted, unique time-based one-time password may be broadcasted by an external Bluetooth beacon communicably coupled to the electronic device.

In an embodiment, the supplementary information comprises position, orientation and acceleration of the user device. Such supplementary information is provided using sensors in the user device. Notably, the server arrangement may be provided with predefined conditions for each of the sensor readings related to position, orientation and acceleration, wherein each of the sensor reading may have a tolerance range associated therewith. Therefore, the user device, when reading the code image, is requested to be within the tolerance range of each of the sensor readings. Additionally or alternatively, the physical location of the user device is validated only if the user device is within the tolerance range of each of the sensor readings. For example, the server arrangement may define that the user device should face south in a tolerance range of +/-30 degrees, when reading the code image. The tolerance range of each of the sensor readings, may be for example, from 5, 10, 15, 20, 25, 30, 35, 40, 45, 50, 55, 60, 65, 70, 75, 80, 85, 90 degrees to 5, 10, 15, 20, 25, 30, 35, 40, 45, 50, 55, 60, 65, 70, 75, 80, 85 and 90 degrees.

In an embodiment, the tag comprises the display associated with the electronic device, wherein the electronic device is configured to produce a sound that may be generated based on the shared secret and a current TOTP. The sound may or may not be within an audible range of a human being wherein the sound is audible between 20 and 20 000 Hz or non-audible below 20 Hz or over 20 000 Hz. Herein, providing the supplementary information may comprise recording the produced sound encrypted with time-based one-time password upon reading the code image and providing such recorded sound to the server arrangement. Subsequently, the server arrangement may decrypt the received sound and compare with the generated and encrypted TOTP that was provided to electronic device. The physical location of the user device is validated if the TOTP obtained by decrypting the received sound matches with the generated TOTP. In another embodiment the server arrangement may be configured to instruct the electronic device to play a sound the server arrangement uploads into it. The Server arrangement would then be the only party in possession of the data that is being used to generate and secure the sound. The produced sound may be the result of any binary data in audible format with identifiable start-stop signals.

In an embodiment, the tag comprises the display associated with the electronic device, wherein the display provides a visual component along with the code image thereon. Such visual component may be provided in a low contrast appearance compared to the visuals surrounding the visual component. Notably, the visual component provided in a low contrast appearance may only be visible and detected in a first-hand reading thereof while reading of the code image. Specifically, such visual component is not clearly detected and recorded in a video and may also be lost during video conversion, transfer and decoding. Therefore, with the use of such visual component, the tag cannot be forged using a video recording or an image, for reading and use later. In other words, such visual component beneficially restricts the use of tag to first-hand reading and prevents malicious and unauthorised use thereof.

In an embodiment, the tag comprises the display associated with the electronic device, wherein the visual elements or audio signals provided by the electronic device are modified with analogical distortions which are recognizable by the first application on the user device used for reading of the code image. The server arrangement provides the electronic device instructions relating to addition of such analogical distortions to the code image shown thereby. Therefore, supplementary information may comprise such analogical distortions, wherein upon reading the code image the user device transmits an image of the tag to the server arrangement. Subsequently, the server arrangement analyses the received image, time of receival of the image, and identifies possible expected analogical distortions on the image. The physical location of the user device is validated if the analogical distortions are validated by the server arrangement. Examples of analogical distortions may include, but are not limited to, a distinguishable pattern on the border of the tag display that is only recognisable by the server arrangement, or a distortion (such as, spiralling) in the code image, or a change in colour or contrast of the code image.

In an embodiment, the supplementary information may comprise environmental conditions proximate to the tag. Specifically, such environmental conditions include, but are not limited to, temperature, humidity, colour temperature, air pressure, noise, and the battery level of the user device. Notably, the server arrangement may store predefined ranges relating to each of the environmental conditions. The user device may employ sensors thereof to measure one or more environmental conditions as requested by the server arrangement. Consequently, such measured values of the one or more environmental conditions requested from the user device are communicated to the server arrangement for verification thereof. The server arrangement validates the user device when the measured values adhere to the predefined ranges stored for the environmental conditions.

In an embodiment, the supplementary information may comprise a challenge response test. Notably, such challenge-response test may be used to verify whether the entity operating the user device is a human or a virtual bot. The challenge-response test comprises challenges that only a human is able to provide a correct response to. Moreover, the challenge may require complex gestures from human as a response. In an example, the user is requested to draw a certain shape on the screen, such as the *'number 8'.* In another example, the user is requested to select all the images that contain specific things therein (such as, *'select all images that have red car in it'*). In another example, the server arrangement may present a question in the display associated with the tag, wherein the response to the question is to be provided using the user device or vice versa. In another example, the user may be requested to change an orientation of the user device (such as, switch the orientation from *'portrait'* to *'landscape*'). In yet another example, the user is requested to flip the user device so that it can use the front camera instead of primary camera when reading the code image. In yet another example, the user may be verified using the front camera of the user device while the primary camera of the user device reads the code image. The server arrangement may recognise and verify the user using artificial intelligence algorithms with previous images of the user taken as a sample set for comparison. In yet another example, two tags may be installed on the opposite walls of a narrow corridor. In such example, the user device is requested to read the two tags simultaneously by employing the front and back camera of the user device.

Optionally, the server arrangement employs machine learning algorithms to further validate the physical location of the user, the user device and the tag. More optionally, the machine learning algorithms employ supervised learning techniques. In one example, the machine learning algorithms are used to determine whether the reading of the code image received from the user device is real or forged. Herein, the server arrangement employs previously received images of the code image as a learning dataset for comparison with the received reading of the code image. In another example, the machine learning algorithms are used to identify physical appearance of surroundings of the tag. The physical appearance of surroundings includes, but is not limited to, wall structure, brick-wall mortar joints, tag location on the closet or on the table. Notably, the machine learning algorithms compare the received reading of the code image with previously received and verified readings of the code image to validate the physical location using physical appearance of the surroundings. Optionally, a building may comprise a plurality of tags installed at different physical locations in the building. A security personnel when patrolling the building has to scan the plurality of code images to mark areas of the building as *'Inspected'.* Based on historical patterns, the machine learning algorithms determine that the security personnel scans the plurality of code images in a particular order at specific intervals in time. Therefore, if on a given day, the order of scanning the plurality of code images changes or the intervals between each scan substantially change, the machine learning algorithms may raise a flag or an alarm to the administrator entity.

### DETAILED DESCRIPTION OF THE DRAWINGS

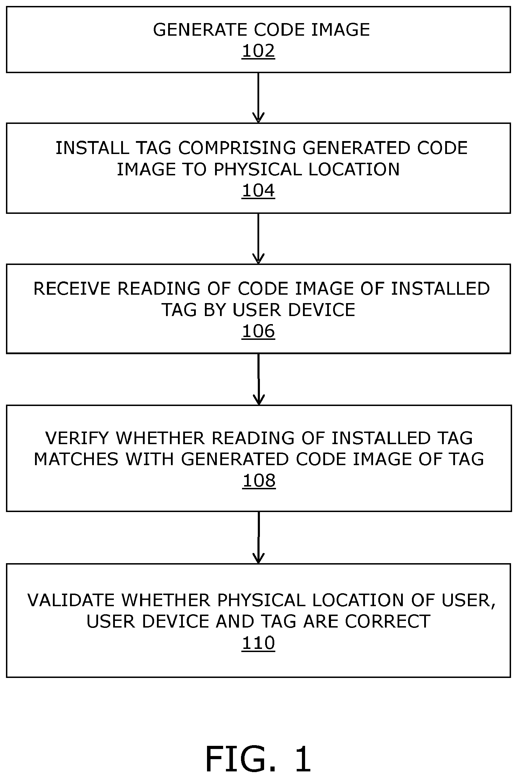

Referring to FIG. 1, there is shown an illustration of steps of a method for validating a physical location of a user, a user device and a tag, in accordance with an embodiment of the present disclosure. The method is depicted as a collection of steps in a logical flow diagram, which represents a sequence of steps that can be implemented in hardware, software, or a combination thereof, for example as aforementioned. At a step **102,** a code image for the tag is generated. At a step **104,** the tag comprising the generated code image is installed at the physical location. At a step **106,** a reading of the code image of the installed tag read by the user device is received. At step **108,** it is verified whether the reading of the installed tag matches with the generated code image of the tag. At a step **110,** it is validated whether the physical location of the user, the user device and the tag are correct.

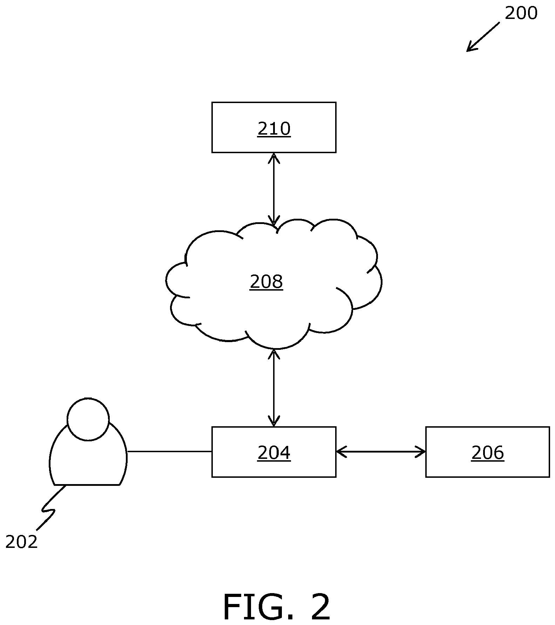

The steps **102, 104, 106, 108** and **110** are only illustrative and other alternatives can also be provided where one or more steps are added, one or more steps are removed, or one or more steps are provided in a different sequence without departing from the scope of the claims herein. Referring to FIG. 2 there is shown a schematic illustration of a system **200** for validating of a user **202,** user device **204** and a tag **206** used in a static mode, in accordance with an embodiment of the present disclosure illustrating an exemplary use case. The system **200** comprises a server arrangement **210** communicably coupled with the user device **204** via a communication network **208.** The user **202** is authenticated to use the user device **204** that reads the code image of the tag **206** and communicates the reading of the code image to the server arrangement **210.**

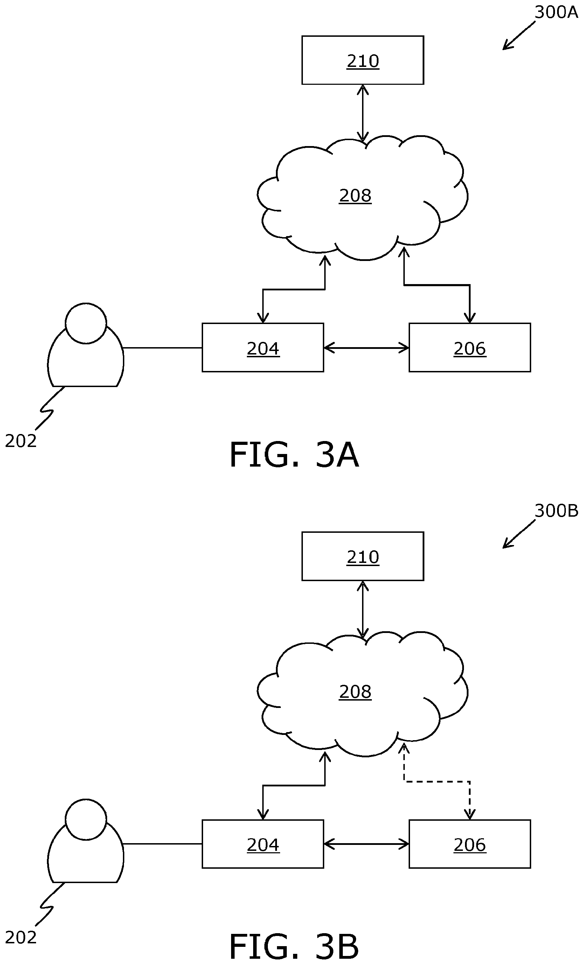

Referring to FIG. 3A and FIG. 3B, there are shown a schematic illustration of a system **300A** and **300B** for validating of a user **202,** user device **204** and a tag **206** in a dynamic-online mode and in a dynamic-offline mode, in accordance with an embodiment of the present disclosure. In the system **300A,** the server arrangement **210** is communicably coupled to the tag **206** via a communication network **208** in a dynamic-online mode for continuous use of the communication network **208.** The user **202** is authenticated to use the user device **204** that reads a data of code image of the tag **206** and communicates the read data of the code image to the server arrangement **210.** In the system **300B,** the server arrangement **210** is communicably coupled to the tag **206** via a communication network **208** in a dynamic-offline mode wherein the communication network **208** is used only on request of the tag **206** or not at all wherein the data is communicated to the tag using out-of-band transfer method. The user **202** is authenticated to use the user device **204** that reads a data of the code image of the tag **206** and communicates the read data of the code image to the server arrangement **210.**

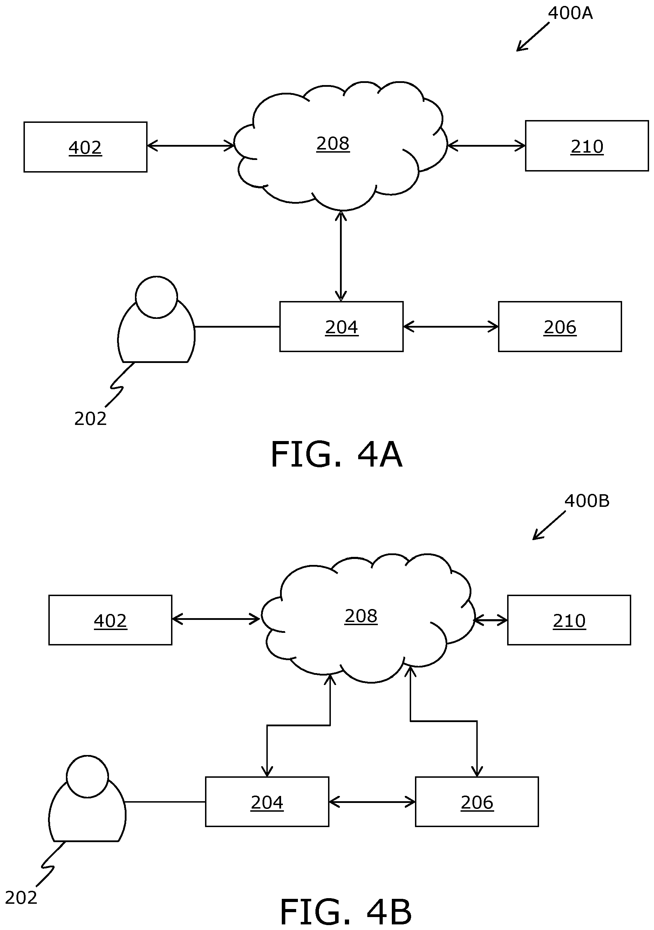

Referring to figures FIG. 4A and FIG. 4B, there are shown schematic illustration of a system **400A** and **400B** for validating of a user **202,** user device **204** and a tag **206,** in accordance with different embodiments of the present disclosure. As shown in FIG. 4A, the system **400A** comprises a server arrangement **210** communicably coupled with the user device **204** via a communication network **208.** The user **202** is authenticated to use the user device **204** that reads a data of the code image of the tag **206** and communicates the read data of the code image to the server arrangement **210.** In addition, the server arrangement **210** is communicably coupled to a control server **402** via the communication network **208.** Furthermore, FIG. 4B illustrates an embodiment wherein the system **400B** comprises a server arrangement **210** communicably coupled with the tag **206** and the user device **204** via a communication network **208.** The user **202** is authenticated to use the user device **204** that reads a data of the code image of the tag **206** and communicates the read data of the code image to the server arrangement **210.** In addition, the server arrangement **210** is further communicably coupled to the control server **402** via the communication network **208.**

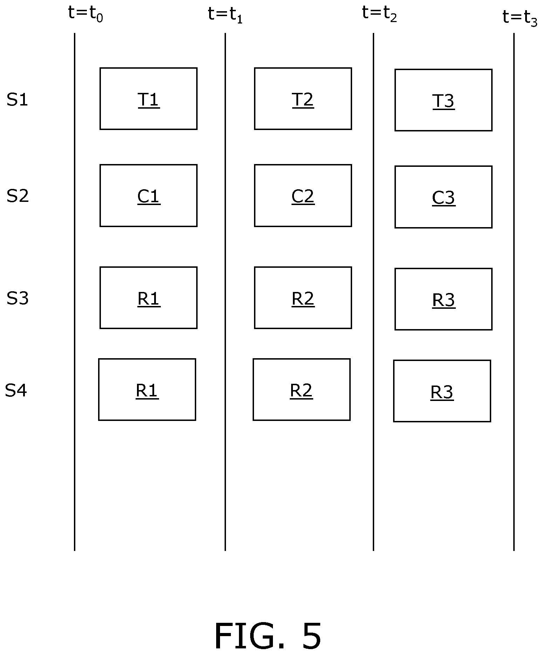

Referring to FIG. 5, there is shown a flow diagram illustrating implementation of code image in a dynamic-online manner, in accordance with an embodiment of the present disclosure. At step S1, the server arrangement (such as the server arrangement **210** of FIG. 3A) generates a token T1 between time intervals t₀ and t₁, a token T2 between time intervals t₁ and t₂ and a token T3 between time intervals t₂ and t₃. At step S2, code images C1, C2 and C3 are created at the tag (such as the tag **206** of FIG. 3A) to be displayed by the tag in respective time intervals. At step S3, the code image C1 is read as R1 by a user device (such as the user device **204** of FIG. 3A) time intervals t₀ and t₁, the code image C2 is read as R2 by the user device between time intervals t₁ and t₂ and the code image C3 is read as R3 between time intervals t₂ and t₃. At step S4, the user device (such as the user device **204** of FIG. 3A) communicates the reading of the code images R1, R2 and R3 to the server arrangement (such as the server arrangement **210** of FIG. 3A) by using the URL in the read code image, wherein the server arrangement is operable to detect an instant of reading of the code images.

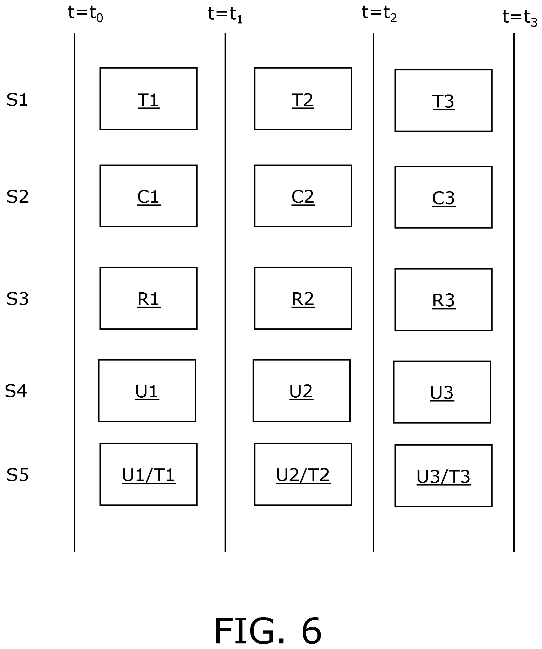

Referring to FIG. 6, there is shown a flow diagram illustrating implementation of a code image in a dynamic-offline manner, in accordance with an embodiment of the present disclosure. At step S1, a tag (such as the tag **206** of FIG. 3B) generates a token T1 between time intervals t₀ and t₁, a token T2 between time intervals t₁ and t₂, and a token T3 between time intervals t₂ and t₃ based on the shared secret and a current time. At the step S2 code images C1, C2 and C3 are generated at the tag including an URL comprising a tenant and tokens T1, T2 and T3 in respective time intervals t₀ and t₁, t₁ and t₂, and t₂ and t₃. At the step S3 a User device (such as the user device **204** of FIG. 3B) reads code images R1, R2 and R3 between time intervals t₀ and t₁, t₁ and t₂, and t₂ and t₃, and identifies URLs U1, U2 and U3. At the step S4 the user device communicates with the server arrangement (such as the server arrangement **210** of FIG. 3B) using URLs U1, U2 and U3 in respective time intervals t₀ and t₁, t₁ and t₂, and t₂ and t₃. At the step S5 the server arrangement receives a request on URLs U1, U2 and U3 between time intervals t₀ and t₁, t₁ and t₂, and t₂ and t₃, and generates tokens T1, T2 and T3 in respective time intervals t₀ and t₁, t₁ and t₂, and t₂ and t₃ based on the shared secret and current time. If tokens in respective URLs U1/T1, U2/T2 and U3/T3 created by the tag and the tokens T1, T2 and T3 generated by the server arrangement match between time intervals t₀ and t₁, t₁ and t₂, and t₂ and t₃, then further processing is allowed. Otherwise further processing is not allowed.

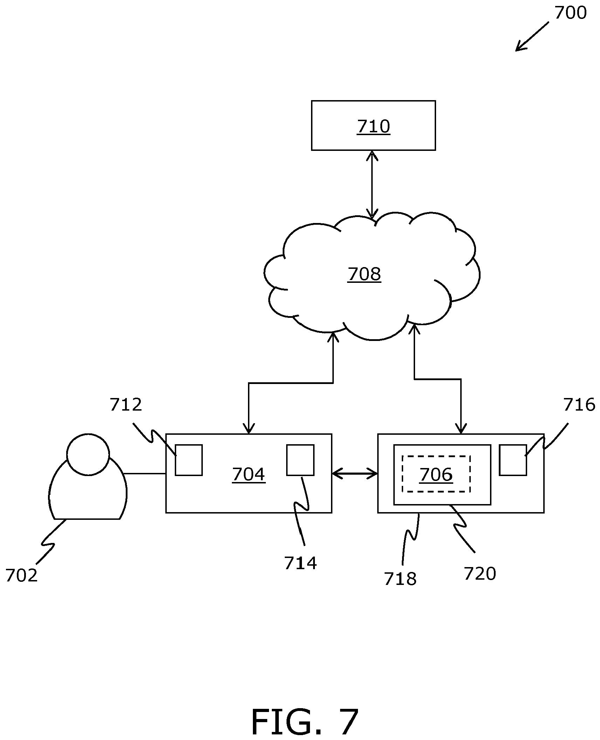

Referring to FIG. 7, there is shown a schematic illustration of a block diagram illustrating implementation of a triple authentication system **700** for validation of a user **702,** user device **704** and a tag **706,** in accordance with an embodiment of the present disclosure. The system **700** comprises a server arrangement **710** communicably coupled with the user device **704** and with the electronic device **718** via a communication network **708.** The user device **704** comprises a first camera **712** to identify the user **702,** a second camera **714** to read a code image, visualised on the tag **706,** wherein the tag is shown on a display **720** associated with an electronic device **718.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for validating a physical location of a user (202), a user device (204) and a tag (206), the method comprising
- generating a code image for the tag;
- installing the tag comprising the generated code image at the physical location;
- receiving a reading of the code image of the installed tag read by the user device;
- determining the physical location of the user device;
- verifying whether the reading of the code image of the installed tag matches with the generated code image of the tag; and
- validating whether the physical location of the user, the user device and the installed tag are correct.

2. A method according to claim 1, wherein validating whether the physical location of the user (202), the user device (204) and the tag (206) are correct comprises
- calculating a distance between the physical location of the user device and the physical location of the tag; and
- providing a first function to the user device if the calculated distance is less than or equal to a predetermined distance or a second function to the user device if the calculated distance is greater than the predetermined distance.

3. A method according to claim 1 or 2, wherein the method further comprises
- associating the tag (206) further with a first orientation information of the tag;
- receiving an orientation of the user device (204) detected during the reading of the code image;
- comparing the first orientation information with the received orientation of the user device; and
- providing a third function to the user device based on the orientation comparison.

4. A method according to any of the preceding claims, wherein the method further comprises generating the code image in a dynamic manner.

5. A method according to claim 4, wherein the generated code image is communicated from a server arrangement (210) over a communication network (208) to the tag (206).

6. A method according to any of the preceding claims, wherein the tag (206) comprises a display for displaying the code image, wherein the displayed code image is a first code image during a first period of time and a second code image during a second period of time.

7. A method according to claim 6, wherein the method further comprises detecting an instant of time of reading of the code image and providing a fourth function to the user device (204) if the instant of time is within the first period of time and a fifth function to the user device if the instant of time is within the second period of time.

8. A system for validating a physical location of a user (202), a user device (204) and a tag (206), the system comprising
- a server arrangement (210) communicably coupled with the user device configured to read a code image of the tag, wherein the server arrangement is configured to
- generate the code image data for the tag,
- receive a reading of the code image data of an installed tag read by the user device,
- determine a physical location of the user device,
- verify whether the reading of the code image data of the tag matches with the generated code image data,
- validate whether the physical location of the user, the user device and the tag are correct; and
- the tag, installed at the physical location, comprising the generated code image.

9. A system according to claim 8, wherein the server arrangement (210) is configured to validate, whether the physical location of the user (202), the user device (204) and the tag (206) are correct by
- calculating a distance between the determined physical location of the user device and the physical location of the tag; and
- providing a first function to the user device if the calculated distance is less than or equal to a predetermined distance or a second function to the user device if the calculated distance is greater than the predetermined distance.

10. A system according to claim 9, wherein the server arrangement (210) is communicably coupled to a control server (402) for providing the first function or the second function to the user device (204).

11. A system according to any of the claims 8-10, wherein the server arrangement (210) is further configured to
- associate the tag (206) further with a first orientation information of the tag;
- receive an orientation of the user device (204) detected during the reading of the code image;
- compare the first orientation information with the received orientation of the user device;
- provide a third function to the user device based on the orientation comparison.

12. A system according to any of the claims 8-11, wherein the server arrangement (210) is further configured to generate the code image data in a dynamic manner.

13. A system according to claim 12, wherein the server arrangement (210) is configured to communicate on request the generated code image data of the tag (206) over a communication network (208).

14. A system according to any of the claims 8-13, wherein the tag (206) comprises a display for displaying the code image, wherein the displayed code image is a first code image during a first period of time and a second code image during a second period of time.

15. A system according to claim 14, wherein the server arrangement (210) is further configured to detect an instant of time of reading of the code image and provide a fourth function to the user device (204) if the instant of time is within the first period of time and a fifth function to the user device if the instant of time is within the second period of time.

16. A system of any of the claims 8-15, wherein the server arrangement (210) is configured to send a request for supplementary information to the user device (204), wherein the physical location of the user (202), the user device and the tag (206) is validated further based on the supplementary information.
